# DEMANDE DE BREVET EUROPEEN

(11) **EP 4 653 719 A1**
(43) Date de publication de la demande: **26.11.2025**
(21) Numéro de dépôt: 25177186.1
(22) Date de dépôt: 19.05.2025
(51) Int. Cl.: F16D 65/00

(54) **TAMBOUR DE FREIN AVEC COURONNE D'ÉTANCHÉITÉ POUR VÉHICULE AUTOMOBILE**

(30) Priorité: 20.05.2024 FR 2405131
(71) Demandeur: Renault s.a.s, 92100 Boulogne Billancourt (FR)
(72) Inventeur: ARNOUX, Ismael, 78280 GUYANCOURT (FR)

(57) **Abrégé**

Tambour de frein (2) pour dispositif de freinage (1) pour véhicule automobile, comportant une base (4) et une paroi périphérique (5) s'étendant à partir de la base (4).

Le tambour de frein (2) comporte une couronne d'étanchéité (7) comportant des moyens de fixation (8) à la paroi périphérique (5) du tambour de frein (2) et au moins un élément étanche (9) apte à diminuer la diffusion de particules dans l'air résultant de l'usure du tambour de frein (2) lors du freinage. La couronne d'étanchéité (7) a une forme de tore.

## Description

### Domaine technique

L'invention concerne un dispositif de freinage à tambour pour véhicule automobile. En particulier, l'invention concerne un tambour de frein d'un dispositif de freinage.

L'invention concerne également un véhicule automobile muni d'un tel dispositif de freinage.

Un dispositif de freinage à tambour est plus économique qu'un dispositif de freinage à disque mais est moins performant, notamment dans des conditions de freinage d'urgence. C'est pourquoi les dispositifs de freinage à tambour sont souvent utilisés sur les roues arrière des véhicules automobiles.

Un dispositif de freinage à tambour comprend un tambour de frein mobile fixé à la roue du véhicule et un plateau de frein fixé au châssis du véhicule. Le plateau de frein comprend des segments de frein composés de matériaux qui résistent à des températures élevées. Les segments de frein comprennent généralement un matériau composite de friction résistant à la chaleur, constitué par exemple de fibres de verre, de métal ou de matériaux céramiques.

Lors du freinage effectué par le conducteur, un piston fixé au plateau de frein pousse les segments de frein de manière à entrer en friction avec le tambour de frein.

La friction entre le plateau de frein et le tambour de frein entraîne la libération dans l'atmosphère de particules polluantes, principalement composées de matériaux métalliques. Les particules ont des tailles variées et certaines particules, dites particules fines, mesurant moins de 10 µm sont particulièrement dangereuses pour les voies respiratoires des populations.

### Exposé de l'invention

Au vu de ce qui précède, la présente invention a pour but de proposer un tambour de frein permettant de réduire considérablement la diffusion de particules dans l'air résultant de la friction entre le tambour de frein et le plateau de frein.

L'invention a donc pour objet un tambour de frein pour dispositif de freinage pour véhicule automobile, comportant une base et une paroi périphérique s'étendant à partir de la base. Le tambour de frein comporte une couronne d'étanchéité comportant des moyens de fixation à la paroi périphérique du tambour de frein et au moins un élément étanche apte à diminuer la diffusion de particules dans l'air résultant de l'usure du tambour de frein lors du freinage.

De préférence, la couronne d'étanchéité a une forme de tore.

Avantageusement, la couronne d'étanchéité comprend des matériaux résistants à des températures s'élevant à 500°C.

Avantageusement, les moyens de fixation de la couronne d'étanchéité au tambour de frein comprennent au moins une vis et/ou au moins un élément de clipsage.

Selon un mode de réalisation, la couronne d'étanchéité comporte au moins deux parties démontables séparées par au moins deux fractionnements de la couronne d'étanchéité.

En option, la couronne d'étanchéité est chargée électro-statiquement.

Avantageusement, la couronne d'étanchéité comprend des trous aptes à évacuer un liquide se trouvant à l'intérieur du tambour de frein.

De préférence, la couronne d'étanchéité est fixée aux extrémités axiales de la paroi périphérique du tambour de frein et dépasse radialement vers l'intérieur du tambour de frein.

L'invention a aussi pour objet un véhicule automobile comprenant un tambour de frein tel que défini ci-dessus.

### Brève description des dessins

D'autres buts, caractéristiques et avantages de l'invention apparaîtront à la lecture de la description suivante, donnée uniquement à titre d'exemple non limitatif et faite en référence aux dessins annexés sur lesquels :
- La [Fig. 1] est une vue latérale d'un dispositif de freinage ; **et**
- La [Fig. 2] est une vue en perspective du tambour de frein d'un dispositif de freinage.

### Description détaillée

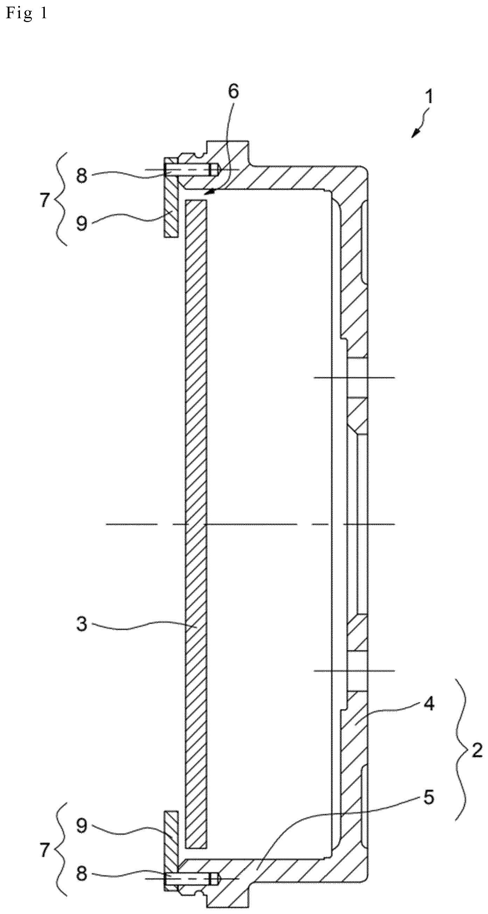

On a représenté sur la figure 1 un dispositif de freinage 1 d'une roue pour véhicule automobile, ledit dispositif de freinage 1 comprenant un tambour de frein 2 et un plateau de frein 3. Le tambour de frein 2 est fixé à la roue du véhicule automobile et est mobile avec la roue tandis que le plateau de frein 3 est solidarisé au châssis du véhicule automobile et est fixe par rapport au châssis.

Le tambour de frein 2 comprend une base 4 et une paroi périphérique 5 annulaire s'étendant à partir de la base 4.

Le plateau de frein 3 comporte des segments de frein annulaires, un piston et un mécanisme hydraulique ou mécanique permettant aux segments de frein de s'écarter lorsque le conducteur freine.

Lorsque le conducteur appuie sur la pédale de frein du véhicule automobile, le piston fixé au plateau de frein 3 pousse les segments de frein afin qu'ils entrent en contact avec la paroi périphérique 5 du tambour de frein 2. La friction entre les segments de frein immobiles et la paroi périphérique 5 du tambour de frein 2 mobiles entraîne le freinage de la roue et du véhicule. Lors du freinage, les efforts de friction entre les segments de frein et la paroi périphérique 5 du tambour provoquent la libération dans l'atmosphère de particules polluantes. Un espace annulaire 6 est en effet présent entre le plateau de frein 3 et le tambour de frein 2, par lequel les particules peuvent être libérées dans l'air sous l'effet de la force centrifuge créée dans le tambour de frein 2 en rotation, projettent les particules vers l'espace annulaire 6.

Pour réduire considérablement le rejet de particules dans l'air, le tambour de frein 2 comprend une couronne d'étanchéité 7 comprenant des moyens de fixation 8 de la couronne 7 à la paroi périphérique 5 du tambour de frein 2 et au moins un élément étanche 9 confinant les particules dans le tambour de frein, afin de diminuer voire supprimer la diffusion de particules dans l'air.

La couronne d'étanchéité 7 a une forme de tore et est fixée à l'extrémité axiale de la paroi périphérique 5 du tambour de frein 2. De préférence, la couronne d'étanchéité 7 s'étend radialement vers l'intérieur du tambour de frein 2, au-delà de la paroi périphérique afin de combler au maximum l'espace annulaire présent entre le tambour de frein 2 et le plateau de frein 3. La couronne d'étanchéité 7 dépasse radialement vers l'intérieur du tambour de frein 2 de quelques millimètres.

La couronne d'étanchéité 7 comprend un ou plusieurs matériaux résistants à des températures s'élevant à 500°C afin de supporter la chaleur produite par la friction des composants lors du freinage.

Les moyens de fixation 8 de la couronne d'étanchéité 7 à la paroi périphérique 5 du tambour de frein 2 comprennent au moins une vis-et/ou au moins un élément de clipsage. L'élément étanche 9 de la couronne d'étanchéité 7 comprend un support annulaire solide avec ou sans mousse et/ou une rangée de poils filtrants. A titre d'exemple, le support annulaire comprend un matériau métallique comme du carbone, de l'acier ou encore de l'aluminium.

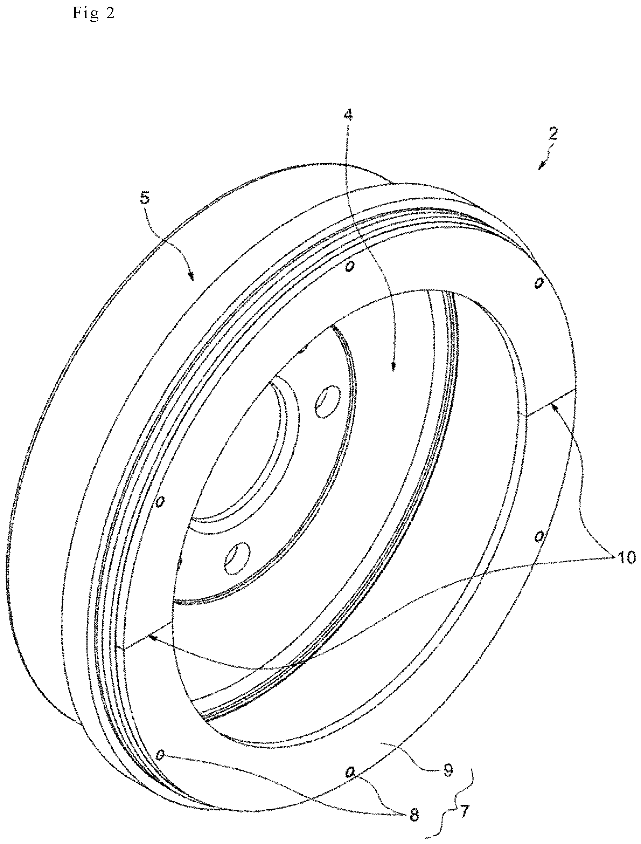

La figure 2 illustre en perspective le tambour de frein 2 comprenant la couronne d'étanchéité 7. L'élément étanche 9 de la couronne d'étanchéité 7 peut également comprendre une partie solide. La couronne d'étanchéité 7 comprend par exemple un support annulaire en matériau composite fixé à la paroi périphérique 5 du tambour de frein 2 et une enveloppe de mousse et/ou de poils filtrants qui recouvre le support annulaire.

La fonction du support annulaire est de créer un obstacle pour les particules de freinage au niveau de l'espace annulaire présent entre le plateau de frein 3 et le tambour de frein 2 et le rôle de la mousse et des poils filtrants est de piéger le plus de particules de freinage possibles pour éviter qu'elles soient libérées dans l'air.

Lors de la révision du dispositif de freinage 1, la mousse et/ou les rangées de poils filtrant recouvrant la couronne d'étanchéité 7 sont retirés, nettoyés et/ou changés afin de restaurer la couronne d'étanchéité 7. De la même manière, la couronne d'étanchéité 7 est facilement accessible et démontable et peut être retirée, changée, nettoyée.

Pour faciliter davantage la maintenance du dispositif de freinage 1 du véhicule automobile, la couronne d'étanchéité 7 comprend deux parties démontables séparées par deux fractionnements 10 de la couronne d'étanchéité 7. Une telle architecture démontable permet de démonter seulement la couronne d'étanchéité 7 et le tambour de frein 2 durant la révision du véhicule.

Lors de la maintenance du véhicule, le dispositif de freinage 1 entier peut être nettoyé et les particules aspirées facilement.

Selon un mode de réalisation, la couronne d'étanchéité 7 est chargée électro-statiquement afin d'améliorer la retenue des particules lors du freinage du véhicule.

De préférence, la couronne d'étanchéité 7 comporte des trous aptes à évacuer un liquide se trouvant à l'intérieur du tambour de frein 2 en cas de fuite par exemple.

## Revendications

1. Tambour de frein (2) pour dispositif de freinage (1) pour véhicule automobile, comportant une base (4) et une paroi périphérique (5) s'étendant à partir de la base (4), **caractérisé en ce qu'**il comporte une couronne d'étanchéité (7) comportant des moyens de fixation (8) à la paroi périphérique (5) du tambour de frein (2) et au moins un élément étanche (9) apte à diminuer la diffusion de particules dans l'air résultant de l'usure du tambour de frein (2) lors du freinage.

2. Tambour (2) selon la revendication 1, dans lequel la couronne d'étanchéité (7) a une forme de tore.

3. Tambour (2) selon l'une des revendications 1 et 2, dans lequel la couronne d'étanchéité (7) comprend des matériaux résistants à des températures s'élevant à 500°C.

4. Tambour (2) selon l'une quelconque des revendications 1 à 3, dans lequel l'élément étanche (9) de la couronne d'étanchéité (7) comprend de la mousse et/ou au moins une rangée de poils filtrants.

5. Tambour (2) selon l'une quelconque des revendications 1 à 4, dans lequel les moyens de fixation (8) de la couronne d'étanchéité (7) au tambour de frein (2) comprennent au moins une vis et/ou au moins un élément de clipsage.

6. Tambour (2) selon l'une quelconque des revendications 1 à 5, dans lequel la couronne d'étanchéité (7) comporte au moins deux parties démontables séparées par au moins deux fractionnements (10) de la couronne d'étanchéité (7).

7. Tambour (2) selon l'une quelconque des revendications 1 à 6, dans lequel la couronne d'étanchéité (7) est chargée électro-statiquement.

8. Tambour (2) selon l'une quelconque des revendications 1 à 7, dans lequel la couronne d'étanchéité (7) comprend des trous aptes à évacuer un liquide se trouvant à l'intérieur du tambour de frein (2).

9. Tambour (2) selon l'une quelconque des revendications 1 à 8, dans lequel la couronne d'étanchéité (7) est fixée à l'extrémité axiale de la paroi périphérique (5) du tambour de frein (2) et dépasse radialement vers l'intérieur du tambour de frein (2).

10. Véhicule automobile comprenant un tambour de frein (2) selon l'une quelconque des revendications 1 à 9.
